(19) Europäisches Patentamt
European Patent Office
Office européen des brevets

(11) **EP 3 771 594 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **20176875.1**

(22) Anmeldetag: **27.05.2020**

(51) Internationale Patentklassifikation (IPC):
**B60M 1/28** (2006.01) **B60L 5/00** (2006.01)
**B61L 23/04** (2006.01)

(52) Gemeinsame Patentklassifikation (CPC):
**B60M 1/28; B61L 23/04**

(54) **VERFAHREN ZUM ERKENNEN FEHLERHAFTER MESSEREIGNISSE UND COMPUTERPROGRAMMPRODUKT**

METHOD FOR DETECTING FAULTY MEASUREMENT EVENTS AND COMPUTER PROGRAM PRODUCT

PROCÉDÉ DE DÉTECTION DES ÉVÉNEMENTS DE MESURE DÉFECTUEUX ET PRODUIT PROGRAMME INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2019 DE 102019211406**

(43) Veröffentlichungstag der Anmeldung:
**03.02.2021 Patentblatt 2021/05**

(73) Patentinhaber: **Siemens Mobility GmbH**
**81739 München (DE)**

(72) Erfinder: **TERFLOTH, Sebastian**
**91080 Uttenreuth (DE)**

(56) Entgegenhaltungen:
**WO-A1-2017/197423 WO-A2-2010/084287**
**DE-A1-102017 217 450**

**Beschreibung**

Die Erfindung betrifft ein Verfahren zum Erkennen fehlerhafter Messereignisse und ein Computerprogrammprodukt mit Mitteln zur Durchführung des erfindungsgemäßen Verfahrens.

Für die Oberleitung elektrischer Verkehrssysteme existieren Diagnose- und Monitoringsysteme, die auf dem Auftreten von Lichtbögen zwischen Fahrdraht und Stromabnehmer basieren. Derlei Lichtbögen entstehen, wenn der Kontakt zwischen Stromabnehmer und Fahrleitung abreißt.

Die Erfassung solcher Lichtbögen erfolgt dabei georeferenziert vom Fahrzeug aus und aus einer Häufung der Lichtbögen wird auf den Zustand der Fahrleitung geschlossen. Dazu wird die in Frage kommende Strecke in der Regel mehrmals befahren. Solche Verfahren sind allgemein bekannt und beispielsweise Gegenstand der DE 10 2016 201 416 oder der DE 10 2017 217 450 A1.

Unter gewöhnlichen Umständen treten Lichtbögen vergleichsweise selten auf, z. B. im Abstand mehrerer Sekunden bis Minuten oder Stunden oder, bezogen auf die Fahrstrecke, im Abstand mehrerer dutzend bis hundert Meter. Dabei wird unter "gewöhnlichen Umständen" verstanden, dass der Zustand des Stromabnehmers einwandfrei und die Fahrleitung nicht aufgrund atmosphärischer Einflüsse mit Eis oder Raureif behangen ist oder eine andere Fremdschicht (z.B. dicke Kupferoxidschicht, wenn die Fahrstrecke wochen- oder monatelang nicht befahren wurde), die sich auf der Fahrleitung gebildet hat, die Kontaktverhältnisse übermäßig verschlechtert.

"Ungewöhnliche Umstände" liegen dann vor, wenn beispielsweise der Stromabnehmer so beschädigt ist, dass er zwar noch an der Fahrleitung geführt wird, aber dennoch zahlreiche Lichtbögen produziert. Ein weiterer, sehr häufiger Fall ist die eingangs bereits erwähnte, elektrische Unterbrechung des Kontaktes Fahrdraht-Schleifleiste durch witterungsbedingte Vereisung oder andere Fremdschichten.

In diesem Fall ist die Anzahl der auftretenden Lichtbögen um ein Vielfaches höher als unter gewöhnlichen Bedingungen. Die Lichtbögen treten nun sehr häufig, zeitlich gesehen, über einen großen Zeitraum im Abstand von Millisekunden bis Sekunden bzw., örtlich gesehen, im Abstand von wenigen Zentimetern bis zu einem Meter auf.

Die Ergebnisse der oben genannten, üblichen Diagnose- und Monitoringsysteme werden dadurch verfälscht, und aufgrund der Vielzahl der Lichtbögen würde in solchen Fällen das Ergebnis der Auswertungslogik auf einen instandhaltungsintensiven Abschnitt der Fahrleitung hinweisen, was in der Realität jedoch ausschließlich auf die ungewöhnlichen Umstände zurückzuführen ist, die keine oder kaum Einfluss auf den tatsächlichen Verschleiß der Fahrleitung haben. Aus oben genannten Diagnose- und Monitoringsystemen abgeleitete Instandhaltungsaufträge wären deshalb fehlerhaft bzw. irreführend, da das Problem nicht besteht.

Bisher wurden die Messdaten bei ungewöhnlichen Bedingungen nur sporadisch gezielt gefiltert. Daher zeigte sich eine fehlerhafte Messung erst bei der Inspektion vor Ort, wenn trotz vieler Lichtbögen keine Störstellen angetroffen wurden. Alternativ müssen die Messdaten bei mutmaßlichen Störungen bei Bedarf bereinigt werden. Dazu ist in der Praxis bisher das manuelle Suchen und Auffinden entsprechender Zeiträume notwendig und der Aufwand entsprechend hoch.

Ziel ist es daher, Zeiten mit ungewöhnlichen Betriebszuständen automatisch von Zeiten mit gewöhnlichen Betriebszuständen zu erkennen bzw. zu unterscheiden und fehlerhafte Messergebnisse zu minimieren und somit im Ergebnis unnötige und kostenintensive Inspektionen von vermeintlich instandsetzungsbedürftigen Fahrleitungen zu vermeiden.

Der Erfindung liegt die Aufgabe zugrunde, ein zumindest teilweise automatisiertes Verfahren zum Erkennen fehlerhafter Messereignisse und ein Computerprogrammprodukt mit Mitteln zur Durchführung des erfindungsgemäßen Verfahrens anzugeben.

Gelöst wird die Aufgabe durch die Merkmale der unabhängigen Patentansprüche. Weiterbildungen und Ausgestaltungen der Erfindung finden sich in den Merkmalen der abhängigen Patentansprüche wieder.

Dabei werden beim erfindungsgemäßen Verfahren zum Erkennen fehlerhafter Messereignisse bei der Überwachung wenigstens einer, entlang einer Fahrstrecke verlaufenden Fahrleitung, Messereignisse mittels wenigstens eines Überwachungssystems im Betrieb innerhalb wenigstens eines Überwachungszeitraums erfasst und mit einem zugehörigen Zeitstempel gespeichert, wobei

- der Überwachungszeitraum in eine Vielzahl gleichlanger, kürzerer Zeitabschnitte unterteilt wird,
- jedem Zeitabschnitt eine entsprechende Kenngröße zugeordnet wird, wobei die Kenngröße aus den, im jeweiligen Zeitabschnitt erfassten Messereignissen ermittelt wird,
- aus den zugeordneten Kenngrößen ein Grenzwert bestimmt wird und
- in Abhängigkeit des Grenzwerts die Zeitabschnitte ermittelt werden, die fehlerhafte Messergebnisse aufweisen.

Bei dem erfindungsgemäßen Verfahren sammelt zunächst ein oder mehrere Schienenfahrzeuge bei der Fahrt bzw. den Fahrten entlang einer Fahrstrecke eine Vielzahl von Messwerten bzw. Messereignissen. Das oder die Fahrzeuge fährt/fahren beispielsweise regelmäßig und mehrmals auf der betreffenden Fahrstrecke. Die Messwerte bzw.

Messereignisse können bei jeder Fahrt aufgenommen und gespeichert werden, je nach Fahrplan beispielsweise also täglich, so dass die Länge des Überwachungszeitraums sehr flexibel festlegbar ist. So kann zur Auswertung der erfassten Daten beispielsweise der gesamte Zeitraum betrachtet werden oder es werden einzelne Zeitscheiben aus dem Gesamtzeitraum, z.B. Tagesscheiben zur Auswertung betrachtet. Durch das Erfassen und Abspeichern der Messereignisse mit einem zugehörigen Zeitstempel wird die zeitliche Zuordnung bei der späteren Auswertung gewährleistet. Nach Auswahl des gewünschten Überwachungszeitzaums wird dieser in kleinere, gleichlange Zeitabschnitte unterteilt, wobei deren Länge nach Bedarf festlegbar ist. Damit ist eine wesentlichfeingranulare Unterteilung und somit Überprüfung des Überwachungszeitraums möglich. Aus den im Überwachungszeitraum aufgetretenen und erfassten Messereignissen wird für jeden Zeitabschnitt aufgrund des Zeitstempels eine Kenngröße ermittelt und diese den betreffenden Zeitabschnitten bevorzugt automatisch zugeordnet.

Die erfindungsgemäße Lösung hat den Vorteil, dass auch sehr große Datenmengen für die Auswertung des Zustandes der Fahrleitung problemlos und schnell analysierbar sind. Außerdem werden die Auswerteergebnisse, aufgrund der präzisen Auswahlkriterien robuster gegen Störeinflüsse und sind somit verlässlicher und präziser als bei manueller Auswahl der Zeitabschnitte, die fehlerhafte Messergebnisse aufweisen, insbesondere weil bei der manuellen Datenauswertung das subjektive Empfinden des Bearbeiters eine entscheidende Rolle spielt. Das erfindungsgemäße Verfahren ist im Ergebnis außerordentlich effektiv und daneben wesentlich weniger zeitaufwändig, da zumindest teilweise automatisiert, und somit auch wesentlich kostengünstiger.

Nach einer bevorzugten Ausführungsform der Erfindung wird als jeweils ein Messereignis jeweils ein an der Fahrleitung aufgetretener Lichtbogen erfasst. Die Beobachtung und Erfassung eines Lichtbogens ist ein in der Praxis erprobtes und etabliertes Verfahren und ist deshalb sehr einfach und exakt durchführbar.

Nach einer weiteren bevorzugten Ausführungsform der Erfindung wird jedes Messereignis mit einem zugehörigen Ortsstempel erfasst und gespeichert. Neben dem Erfassen mit einem Zeitstempel ist es besonders vorteilhaft zusätzlich jedes Messereignis, also jeden Lichtbogen, mit einem Ortsstempel zu erfassen, da dies im Betrieb ohne weiteren Zeitaufwand problemlos möglich ist und hiermit weitere Auswertemöglichkeiten eröffnet werden. Hierzu werden beim Auftreten eines Lichtbogens mittels der bereits genannten Diagnose- und Monitoringsysteme und deren Mess- und Auswertungsverfahren, die sich im jeweiligen Schienenfahrzeug befinden, beispielsweise über ein integriertes GPS-System, die geographische Länge lon und geographische Breite lat eines jeden Lichtbogens bestimmt und erfasst, bzw. zusätzlich gespeichert.

Nach einer weiteren, besonders bevorzugten Ausführungsform der Erfindung wird der Grenzwert aus dem arithmetischen Mittelwert der Kenngröße pro Zeitabschnitt (t) bestimmt. Dies ist ein besonders einfach durchzuführendes und effektives Vorgehen, um schnell und effektiv einen aussagekräftigen Grenzwert zu ermitteln.

Nach einer weiteren besonders bevorzugten Ausführungsform der Erfindung wird der Grenzwert aus dem arithmetischen Mittelwert der Kenngröße pro Zeitabschnitt (t) und einer geeigneten statistischen Größe zur Bestimmung des Streumaßes der Kenngröße pro Zeitabschnitt(t) bestimmt. Mit der Einbeziehung einer geeigneten statistischen Größe zur Bestimmung des Streumaßes der Kenngröße pro Zeitabschnitt kann der Grenzwert noch präziser ermittelt werden, da die entsprechenden Messwertstreuungen entsprechend mitberücksichtigt werden.

Besonders bevorzugt wird als geeignete statistische Größe zur Bestimmung des Streumaßes der Kenngröße pro Zeitabschnitt(t) die Standardabweichung verwendet, da dies entsprechend einfach und problemlos umgesetzt werden kann und zusätzlich eine hohe Aussagekraft aufweist.

Nach einer weiteren besonders bevorzugten Ausführungsform der Erfindung kann der Grenzwert durch einen Skalierungsfaktor verschoben werden. Dies hat den Vorteil, dass auf variable Streumaße, z.B. stark schwankende Standardabweichungen, reagiert werden kann, die sonst zu einem zu hohen oder zu geringen Grenzwert führen könnten, welche die Auswertebasis und damit die Auswerteergebnisse negativ beeinflussen könnten. So könnten beispielsweise bei einem zu niedrigen Grenzwert zu viele Zeitabschnitte irrtümlich aussortiert werden und für die weitere Auswertung wegfallen und somit die Ergebnisse verfälschen oder gar unbrauchbar machen.

Besonders bevorzugt werden die Zeitabschnitte als Zeitabschnitte mit fehlerhaften Messereignissen identifiziert, bei denen die, aus den, im jeweiligen Zeitabschnitt erfassten Messereignissen ermittelte, zugeordnete Kenngröße größer als der Grenzwert ist. Nach einer weiteren bevorzugten Ausführungsform der Erfindung werden diese Zeitabschnitte, die als Zeitabschnitte mit fehlerhaften Messereignissen identifiziert werden, für weitere Auswertungen ausgenommen.

Dies hat den Vorteil, dass Zeitabschnitte, die als Zeitabschnitte mit ungewöhnlichen Betriebszustanden, also mit fehlerhaften Messereignissen behaftet, identifiziert wurden, für die weitere Auswertung des Zustandes der überwachten Fahrleitung ausgenommen werden und somit die Ergebnisse wesentlich aussagekräftiger und präziser werden und damit deutlich weniger fehlerbehaftet sind.

Nach einer weiteren, besonders bevorzugten Ausführungsform der Erfindung ist die, aus den, im jeweiligen Zeitabschnitt erfassten Messereignissen ermittelte Kenngröße, die, im jeweiligen Zeitabschnitt an der Fahrleitung aufgetretene Anzahl der Lichtbögen. Dies ist eine äußerst einfache und damit schnelle und günstige Art und Weise, eine aussagekräftige Kenngröße zu bestimmen.

Als eine weitere bevorzugte Ausführungsform der Erfindung ist die, aus den, im jeweiligen Zeitabschnitt (t) erfassten Messereignissen ermittelte Kenngröße, die, im jeweiligen Zeitabschnitt (t) zwischen jeweils zwei aufeinanderfolgenden, an der Fahrleitung aufgetretenen Lichtbögen, im Mittel zurückgelegte Wegstrecke. Dabei wird besonders bevorzugt die Wegstrecke zwischen zwei aufeinanderfolgenden, an der Fahrleitung aufgetretenen Lichtbögen, mittels der zugehörigen erfassten Ortsstempel bestimmt.

Vorteilhafterweise gibt es mit dieser alternativen, unabhängigen Vorgehensweise zur Bestimmung einer weiteren Kenngröße eine weitere Möglichkeit zur Bestimmung von Zeitabschnitten, die als Zeitabschnitte mit ungewöhnlichen Betriebszustanden, also mit fehlerhaften Messereignissen behaftet, identifiziert werden. Damit ist neben der bereits erwähnten, unabhängigen, separaten Anwendung, insbesondere auch die wechselseitige Überprüfung der Ergebnisse in Bezug auf die erfindungsgemäße Variante mit der, im jeweiligen Zeitabschnitt an der Fahrleitung aufgetretene Anzahl der Lichtbögen als zugrundeliegende Kenngröße möglich. Dies führt zu einer weiteren Verbesserung der Aussagekraft über den Zustand der überwachten Fahrleitung.

Eine weitere, ganz besonders bevorzugte Ausprägung der Erfindung ist ein Computerprogrammprodukt mit Mitteln zur Durchführung des erfindungsgemäßen Verfahrens, mit der eine entsprechende Automatisierung und somit Vereinfachung bei gleichzeitig wesentlich gesteigerter Präzision und Effektivität der Ergebnisse bzw. Vorhersagen erreicht wird.

Im Weiteren werden bevorzugte Ausführungsbeispiele der Erfindung mit Bezugnahme auf die Zeichnungen näher erläutert. Es zeigen:

Fig. 1    ein Flussdiagramm zur prinzipiellen Funktionsweise des erfindungsgemäßen Verfahrens und

Fig. 2    ein Ergebnisdiagramm zur Ermittlung von Zeiträumen ungewöhnlicher Bedingungen, bzw. fehlerhafter Messereignisse gemäß Variante 1 des erfindungsgemäßen Verfahrens.

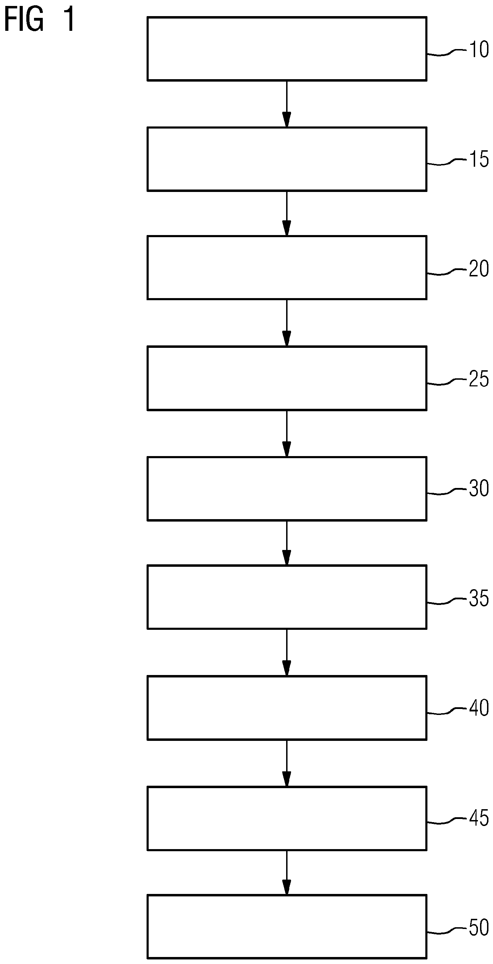

Fig. 1 zeigt ein Flussdiagramm zur prinzipiellen Funktionsweise des erfindungsgemäßen Verfahrens zum Erkennen fehlerhafter Messereignisse.

In Schritt 10 des erfindungsgemäßen Verfahrens werden zunächst bei der Überwachung einer, entlang einer Fahrstrecke verlaufenden Fahrleitung, entsprechende, geeignete Messereignisse, die Rückschlüsse auf den Zustand der Fahrleitung zulassen, mittels Überwachungssystemen, die sich an Bord der Schienenfahrzeuge befinden, während des Betriebs erfasst und gespeichert. Hierfür geeignete Messereignisse sind beispielsweise Lichtbögen, deren Anzahl ein Maß für den Zustand der Fahrleitung ist. Als Bewertungsgrundlage dient hier der zeitliche (Variante 1) oder räumliche Abstand (Variante 2) des Auftretens der Lichtbögen. Das Auftreten jedes Lichtbogens wird deshalb jeweils mit entsprechendem Zeitstempel und/oder Ortsstempel erfasst und in einer entsprechenden Speichereinheit zur späteren Auswertung gespeichert. Insbesondere bezüglich des Ortsstempels werden mittels der an Bord der Schienenfahrzeuge befindlichen Diagnose- und Monitoringsysteme und deren Mess- und Auswertungsverfahren, beispielsweise über ein integriertes GPS-System, die geographische Länge lon und die geographische Breite lat eines jeden Lichtbogens bestimmt und erfasst.

Dazu befahren ein oder auch mehrere Schienenfahrzeuge die betreffende, zu überprüfende Fahrstrecke über einen gewissen Zeitraum hinweg, z. B. Tage, Wochen oder auch Monate. Aus diesen Zeiträumen mit den aufgezeichneten Messereignissen wird ein gewünschter Überwachungszeitraum (T) ausgewählt, bzw. festgelegt, aus dem bestimmt wird, wie viele Lichtbögen in einem definierten Zeitraum auftreten, d.h. in welchem Zustand sich die Fahrleitung der zu überprüfenden Fahrstrecke befindet, und ob diese gewartet bzw. ausgetauscht werden muss. Als Überwachungszeitraum (T) wird zu weiteren Auswertungen in der Regel der gesamte aufgezeichnete Zeitraum zugrunde gelegt, da die statistische Grundlage entsprechend breit und damit zuverlässiger ist. Es ist aber selbstverständlich auch denkbar bei Bedarf Zeitscheiben mit individuell ausgewählter, kürzerer Länge, beispielsweise ein-Tages-Zeitscheiben, zu betrachten. Hierfür stehen alle Möglichkeiten offen.

In Schritt 15 wird als nächstes der in Schritt 10 festgelegte Überwachungszeitraum (T) in einzelne, jeweils gleichlange Zeitabschnitte der Länge t, beispielsweise 1 oder 10 Minuten, unterteilt. Die Länge der Zeitabschnitte (t), in die der Überwachungszeitraum (T) unterteilt werden soll, ist dabei individuell einstellbar und nicht auf die oben genannten Werte beschränkt.

Im Schritt 20 wird anschließend ausgewählt, welche Kenngröße für das weitere Verfahren zugrunde gelegt werden soll, d.h. ob als Basis der zeitliche (Variante 1) oder räumliche Abstand (Variante 2) des Auftretens der Lichtbögen dienen soll. Beide Varianten können selbstverständlich auch parallel durchgeführt werden, wodurch sich die Möglichkeit zur wechselseitigen Überprüfung und somit der Plausibilitätsprüfung der Auswerteergebnisse ergibt.

Für Variante 1 wird im Schritt 25 auf Basis der gespeicherten Zeitstempel der aufgetretenen Messereignisse, also der Lichtbögen, als Kenngröße deren Anzahl n(t) in jedem der Zeitabschnitte (t) automatisch bestimmt und zugeordnet. Dazu wird die Anzahl n(t) in jedem der Zeitabschnitte gezählt und gespeichert.

Alternativ wird für Variante 2 im Schritt 25 auf Basis der gespeicherten Zeit- und Ortsstempel der aufgetretenen Lichtbögen als Kenngröße die mittlere, zurückgelegte Wegstrecke s(t) zwischen jeweils zwei aufeinanderfolgenden Lichtbögen in jedem der Zeitabschnitte (t) automatisch bestimmt und zugeordnet. Dazu wird zunächst die zurückgelegte Wegstrecke zwischen jeweils zwei aufeinanderfolgenden Lichtbögen ermittelt, dies für alle betreffenden Lichtbögen im entsprechenden Zeitabschnitt (t) durchgeführt und daraus dann über Mittelwertbildung die mittlere Wegstrecke s(t) zwischen jeweils zwei aufeinanderfolgenden Lichtbögen im betrachteten Zeitabschnitt (t) bestimmt und zugeordnet. Die Berechnung der zurückgelegten Wegstrecke zwischen jeweils zwei aufeinanderfolgenden Lichtbögen erfolgt dabei mittels der erfassten geographischen Länge lon und geographischen Breite lat eines jeden Lichtbogens.

Beispielsweise tritt Lichtbogen i bei lon(i) und lat(i) auf und der unmittelbar folgende Lichtbogen i+1 bei lon(i+1) und lat(i+1). Der Abstand zwischen zwei Breitengraden beträgt etwa 111,3 km, der Abstand zwischen zwei Längengraden ist vom Breitengrad abhängig und beträgt 111,3 * cos(lat). Somit kann die zwischen zwei Lichtbögen zurückgelegte Strecke gemäß folgender Beziehung bestimmt werden:

$$S(i+1;i) = \sqrt{(((lat(i+1)-lat(i))*111,3)^2 + ((lon(i+1)-lon(i))*111,3*cos(lat(i))^2)))}.$$

Im Schritt 30 wird anschließend der arithmetische Mittelwert aus allen, den jeweiligen Zeitabschnitten (t) zugeordneten Kenngrößen gebildet, sowie daraus bei Bedarf zusätzlich eine statistische Größe zur Bestimmung des Streumaßes der betreffenden Kenngröße, beispielsweise die Standardabweichung $\sigma$ bestimmt. Bei Variante 1 erhält man in Schritt 30 demzufolge die durchschnittliche Anzahl der Lichtbögen $n_{mittel}$ je Zeitabschnitt (t), ggf. mit der zugehörigen Standardabweichung $\sigma_n$. Bei Variante 2 erhält man somit den Mittelwert $s_{mittel}$ der mittleren, zurückgelegten Wegstrecken s(t) zwischen jeweils zwei aufeinanderfolgenden Lichtbögen über alle Zeitabschnitte (t) hinweg, ggf. mit der zugehörigen Standardabweichung $\sigma_s$.

Im nächsten Schritt 35 wird aus den ermittelten Mittelwerten der Kenngrößen, einschließlich ggf. der jeweiligen Standardabweichungen, ein Grenzwert als Maß für die Unterscheidung zwischen gewöhnlichen und ungewöhnlichen Bedingungen abgeleitet. Bei Variante 1 ergibt sich daher der abgeleitete Grenzwert aus der durchschnittlichen Anzahl der Lichtbögen $n_{mittel}$ je Zeitabschnitt (t) und ggf. der zugehörigen Standardabweichung, z.B.: $n_{Grenz} = n_{mittel} + \sigma_n$. Bei Variante 2 ergibt sich analog der abgeleitete Grenzwert aus dem Mittelwert $s_{mittel}$ der mittleren, zurückgelegten Wegstrecken s(t) zwischen jeweils zwei aufeinanderfolgenden Lichtbögen über alle Zeitabschnitte (t) hinweg und ggf. der zugehörigen Standardabweichung, z.B.: $s_{Grenz} = s_{mittel} + \sigma_s$.

Anschließend werden im Schritt 40 die Zeitabschnitte (t) des Überwachungszeitraums (T) als Zeitabschnitte mit fehlerhaften Messereignissen identifiziert, bei denen die, aus den, im jeweiligen Zeitabschnitt (t) erfassten Messereignissen ermittelte, zugeordnete Kenngröße größer als der oder gleich dem Grenzwert ist. Dies kann selbstverständlich gleichwertig auch nur auf den Fall größer als der Grenzwert beschränkt werden. Bei Variante 1 gilt als Kriterium für die Klassifizierung der Zeitabschnitte (t) (mit Standardabweichung) dann:

- Für Zeitraum mit ungewöhnlichen Bedingungen:

$$n(t) \geq n_{Grenz}, \text{ also } n(t) \geq n_{mittel} + k*\sigma_n.$$

Bzw. demzufolge

- für Zeitraum mit gewöhnlichen Bedingungen:

$$n(t) < n_{Grenz}, \text{ also } n(t) < n_{mittel} + k*\sigma_n.$$

Bei Variante 2 gilt als Kriterium für die Klassifizierung der Zeitabschnitte (t) (mit Standardabweichung) analog:

- Für Zeitraum mit ungewöhnlichen Bedingungen:

$$s(t) \geq s_{Grenz}, \text{ also } s(t) \geq s_{mittel} + k*\sigma_s.$$

Bzw. demzufolge

- für Zeitraum mit gewöhnlichen Bedingungen:

$$s(t) < s_{Grenz}, \text{ also } s(t) < s_{mittel} + k*\sigma_s.$$

Dabei kann bei beiden Varianten über einen zusätzlichen Faktor k der Grenzwert ggf. so verschoben werden, dass auf variable Streumaße reagiert werden kann, die zu einem zu hohen oder zu geringen Grenzwert führen könnten, der die Auswertebasis und damit die Auswerteergebnisse negativ beeinflussen könnte. Hiermit kann verhindert werden, dass beispielsweise bei einem zu niedrigen Grenzwert zu viele Zeitabschnitte irrtümlich aussortiert werden, für die weitere Auswertung wegfallen und somit die Ergebnisse verfälschen oder gar unbrauchbar machen.

In Schritt 45 werden dann, als Ergebnis von Schritt 40, sowohl für Variante 1 als auch für Variante 2 die Zeitabschnitte (t) mit ungewöhnlichen Bedingungen, also die Zeitabschnitte (t) die als Zeitabschnitte (t) mit fehlerhaften Messereignissen identifiziert wurden, ausgenommen und für die weitere Auswertung nicht weiter berücksichtigt, da diese Daten nicht für den aktuellen Zustand und somit nicht für die Beurteilung bezüglich Instandhaltung der zu überprüfenden Fahrleitung relevant sind, sondern das Ergebnis verfälschen würden.

In einem weiteren Schritt 50 können, wie oben bereits beschrieben, bei der parallelen Anwendung beider Varianten, die Ergebnisse beider Varianten wechselseitig überprüft werden, um somit die in beiden Varianten identifizierten Zeitabschnitte (t) mit fehlerhaften Messereignissen, bzw. mit ungewöhnlichen Bedingungen, zu überprüfen, bzw. zu verifizieren. Darüber hinaus können die Ergebnisse, bzw. die identifizierten Zeitabschnitte (t) ggf. zusätzlich anhand von Klimadaten als Quercheck untersucht werden, ob die aussortierten Zeitabschnitte (t) mit typischen eisbildenden Umgebungsbedingungen korrelieren oder andere Gründe für eine erhöhte Anzahl an Lichtbögen vorliegen.

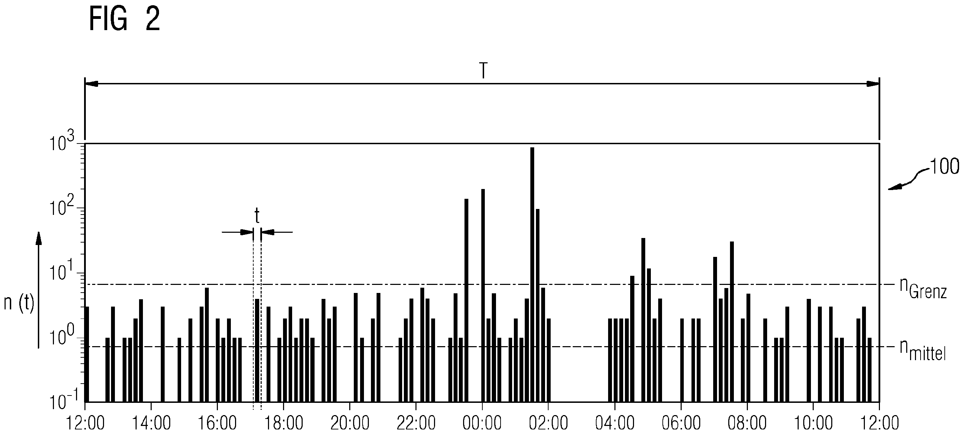

Fig. 2 zeigt ein Ergebnisdiagramm zur Ermittlung von Zeiträumen ungewöhnlicher Bedingungen, bzw. fehlerhafter Messereignisse gemäß Variante 1 des erfindungsgemäßen Verfahrens.

In Fig. 2 ist ein beispielhaftes Ergebnis der Variante 1 des erfindungsgemäßen Verfahrens anhand eines Diagramms (100) für einen 24-Stunden-Überwachungszeitraum (T) dargestellt, der in Zeitabschnitte (t) mit t = 10 min. unterteilt wurde. Die mittlere Anzahl an Lichtbögen beträgt im Diagramm (100) ca. $n_{mittel}$ = 0,72 Lichtbogen/10 min, der Grenzwert liegt bei $n_{Grenz}$ = 6,9 Lichtbogen/10 min. Alle Zeitabschnitte (t) mit einer Anzahl von Lichtbögen kleiner als der ermittelte Grenzwert sind als Zeitabschnitte (t) mit gewöhnlichen Bedingungen einzustufen, Zeitbschnitte (t) mit einer Anzahl von Lichtbögen über dem ermittelten Grenzwert dementsprechend als Zeitabschnitte (t) mit ungewöhnlichen Bedingungen, wie die hohe Anzahl an Lichtbögen von bis zu 850 Lichtbögen/10 min in der Zeit zwischen 23:00 Uhr und 02:00 Uhr zeigt. Insgesamt zeigt das Beispiel, dass für die weitere Auswertung hier insgesamt neun der 10min-Zeitabschnitte (t) aussortiert werden, die sonst zu einer signifikanten Verfälschung der Auswerteergebnisse führen würden.

**Patentansprüche**

1. Verfahren zum Erkennen fehlerhafter Messereignisse bei der Überwachung wenigstens einer, entlang einer Fahrstrecke verlaufenden Fahrleitung, wobei Messereignisse mittels wenigstens eines Überwachungssystems im Betrieb innerhalb wenigstens eines Überwachungszeitraums (T) erfasst und mit einem zugehörigen Zeitstempel gespeichert werden,
   **dadurch gekennzeichnet, dass**

   - der Überwachungszeitraum in eine Vielzahl gleichlanger Zeitabschnitte (t) unterteilt wird,
   - jedem Zeitabschnitt (t) eine entsprechende Kenngröße zugeordnet wird, wobei die Kenngröße aus den, im jeweiligen Zeitabschnitt (t) erfassten Messereignissen ermittelt wird,
   - aus den zugeordneten Kenngrößen ein Grenzwert bestimmt wird und
   - in Abhängigkeit des Grenzwerts die Zeitabschnitte (t) ermittelt werden, die fehlerhafte Messergebnisse aufweisen.

2. Verfahren nach Anspruch 1,
   **dadurch gekennzeichnet, dass**
   als jeweils ein Messereignis jeweils ein an der Fahrleitung aufgetretener Lichtbogen erfasst wird.

3. Verfahren nach einem der Ansprüche 1 oder 2,
   **dadurch gekennzeichnet, dass**
   jedes Messereignis mit einem zugehörigen Ortsstempel erfasst und gespeichert wird.

4. Verfahren nach einem der vorherigen Ansprüche,
   **dadurch gekennzeichnet, dass**
   der Grenzwert aus dem arithmetischen Mittelwert der Kenngröße pro Zeitabschnitt (t) bestimmt wird.

**5.** Verfahren nach einem der Ansprüche 1 bis 3,
**dadurch gekennzeichnet, dass**
der Grenzwert aus dem arithmetischen Mittelwert der Kenngröße pro Zeitabschnitt (t) und einer statistischen Größe zur Bestimmung des Streumaßes der Kenngröße pro Zeitabschnitt (t) bestimmt wird.

**6.** Verfahren nach Anspruch 5,
**dadurch gekennzeichnet, dass**
als statistische Größe zur Bestimmung des Streumaßes der Kenngröße pro Zeitabschnitt (t) die Standardabweichung $\sigma$ verwendet wird.

**7.** Verfahren nach einem der vorherigen Ansprüche,
**dadurch gekennzeichnet, dass**
der Grenzwert durch einen Skalierungsfaktor k verschoben werden kann.

**8.** Verfahren nach einem der vorstehenden Ansprüche,
**dadurch gekennzeichnet, dass**
die Zeitabschnitte (t) als Zeitabschnitte mit fehlerhaften Messereignissen identifiziert werden, bei denen die, aus den, im jeweiligen Zeitabschnitt (t) erfassten Messereignissen ermittelte, zugeordnete Kenngröße größer als der Grenzwert ist.

**9.** Verfahren nach einem der vorstehenden Ansprüche,
**dadurch gekennzeichnet, dass**
die Zeitabschnitte, die als Zeitabschnitte (t) mit fehlerhaften Messereignissen identifiziert werden, für weitere Auswertungen ausgenommen werden.

**10.** Verfahren nach einem der vorstehenden Ansprüche,
**dadurch gekennzeichnet, dass**
die, aus den, im jeweiligen Zeitabschnitt (t) erfassten Messereignissen ermittelte Kenngröße, die, im jeweiligen Zeitabschnitt (t) an der Fahrleitung aufgetretene Anzahl der Lichtbögen ist.

**11.** Verfahren nach einem der Ansprüche 1 bis 9,
**dadurch gekennzeichnet, dass**
die, aus den, im jeweiligen Zeitabschnitt (t) erfassten Messereignissen ermittelte Kenngröße, die, im jeweiligen Zeitabschnitt (t) zwischen jeweils zwei aufeinanderfolgenden, an der Fahrleitung aufgetretenen Lichtbögen, im Mittel zurückgelegte Wegstrecke ist.

**12.** Verfahren nach Anspruch 11,
**dadurch gekennzeichnet, dass**
die Wegstrecke zwischen zwei aufeinanderfolgenden, an der Fahrleitung aufgetretenen Lichtbögen, mittels der zugehörigen erfassten Ortsstempel bestimmt wird.

**13.** Computerprogrammprodukt mit Mitteln zur Durchführung des Verfahrens nach einem der Ansprüche 1 bis 12.

**Claims**

**1.** Method for detecting faulty measurement events while monitoring at least one catenary running along a track system, wherein measurement results are detected by means of at least one monitoring system during operation within at least one monitoring time frame (T) and with an associated time stamp, **characterised in that**

- the monitoring time frame is subdivided into a plurality of time segments (t) of equal length,
- a corresponding parameter is associated with each time segment (t), wherein the parameter is determined from the measuring results detected in the respective time segment (t),
- a limit value is determined from the associated parameters and
- the time segments (t) which have faulty measuring results are determined as a function of the limit value.

**2.** Method according to claim 1,
**characterised in that**

an arc occurring on the catenary is captured in each case as a measurement event.

3. Method according to one of claims 1 or 2,
   **characterised in that**
   each measuring result is detected and stored with an associated location stamp.

4. Method according to one of the preceding claims, **characterised in that**
   the limit value is determined from the arithmetic average value of the parameter per time segment (t).

5. Method according to one of claims 1 to 3,
   **characterised in that**
   the limit value is determined from the arithmetic average value of the parameter per time segment (t) and a statistical variable for determining the spread of the parameter per time segment (t).

6. Method according to claim 5, **characterised in that** the standard deviation $\sigma$ is used as a statistical variable for determining the spread of the parameter per time segment (t)

7. Method according to one of the preceding claims, **characterised in that** the limit value can be displaced by means of a scaling factor k.

8. Method according to one of the preceding claims, **characterised in that**
   the time segments (t) are identified as time segments with faulty measurement events, in which the associated parameter determined from the measurement events detected in the respective time segment (t) is larger than the limit value.

9. Method according to one of the preceding claims, **characterised in that**
   the time segments, which are identified as time segments (t) with faulty measurement events, are excluded for further evaluations.

10. Method according to one of the preceding claims, **characterised in that**
    the parameter determined from the measurement events detected in the respective time segment (t) is the number of arcs occurring in the respective time segment (t) on the catenary.

11. Method according to one of claims 1 to 9,
    **characterised in that**
    the parameter determined from the measurement events detected in the respective time segment (t) is the distance travelled on average in the respective time segment (t) between two consecutive arcs occurring on the catenary.

12. Method according to claim 11,
    **characterised in that**
    the distance between two consecutive arcs occurring on the catenary is determined by means of the associated, detected location stamp.

13. Computer program product with means for carrying out the method according to one of claims 1 to 12.

**Revendications**

1. Procédé de détection d'événements de mesure entachés d'erreur dans le contrôle d'au moins une caténaire s'étendant le long d'une voie de circulation, dans lequel on détecte, au moyen d'au moins un système de contrôle, des événements de mesure en fonctionnement dans au moins un espace (T) de temps de contrôle et on les met en mémoire avec un horodatage leur appartenant,
   **caractérisé en ce que**

   - on subdivise l'espace de temps de contrôle en une pluralité de laps (t) de temps de même longueur,
   - on associe une grandeur caractéristique correspondante à chaque laps (t) de temps, dans lequel on détermine la grandeur caractéristique à partir des événements de mesure détectés dans l'espace (t) de temps respectif,
   - on définit une valeur limite à partir des grandeurs caractéristiques associées et

- on détermine en fonction de la valeur limite les laps (t) de temps, qui ont des résultats de mesure entachés d'erreur.

2. Procédé suivant la revendication 1,
   **caractérisé en ce que**
   l'on détecte, comme respectivement un événement de mesure, respectivement un arc électrique apparu sur la caténaire.

3. Procédé suivant l'une des revendications 1 ou 2,
   **caractérisé en ce que**
   l'on détecte et on met en mémoire chaque événement de mesure avec un horodatage qui lui appartient.

4. Procédé suivant l'une des revendications précédentes, **caractérisé en ce que**
   l'on définit la valeur limite à partir de la valeur moyenne arithmétique de la grandeur caractéristique par laps (t) de temps.

5. Procédé suivant l'une des revendications 1 à 3,
   **caractérisé en ce que**
   l'on définit la valeur limite à partir de la valeur moyenne arithmétique de la grandeur caractéristique par laps (t) de temps et d'une grandeur statistique de définition de la mesure de la dispersion de la grandeur caractéristique par laps (t) de temps.

6. Procédé suivant la revendication 5,
   **caractérisé en ce que**
   l'on utilise l'écart-type σ comme grandeur caractéristique de définition comme la mesure de la dispersion de la grandeur caractéristique par laps (t) de temps.

7. Procédé suivant l'une des revendications précédentes, **caractérisé en ce que**
   la valeur limite peut être décalée d'un facteur k de mise à l'échelle.

8. Procédé suivant l'une des revendications précédentes, **caractérisé en ce que**
   l'on identifie les laps (t) de temps, comme des laps de temps ayant des événements de mesure entachés d'erreur, dans lesquels la grandeur caractéristique associée déterminée à partir des événements de mesure détectés dans le laps (t) de temps respectif est plus grande que la valeur limite.

9. Procédé suivant l'une des revendications précédentes, **caractérisé en ce que**
   l'on exclut pour d'autres évaluations des laps de temps qui sont identifiés comme des laps (t) de temps ayant des événements de mesure entachés d'erreur.

10. Procédé suivant l'une des revendications précédentes, **caractérisé en ce que**
    la grandeur caractéristique, déterminée à partir des événements de mesure détectés dans le laps (t) de temps respectif, est le nombre d'arcs électriques apparus sur la caténaire dans le laps (t) de temps respectif.

11. Procédé suivant l'une des revendications 1 à 9,
    **caractérisé en ce que**
    la grandeur caractéristique, déterminée à partir des événements de mesure détectés dans le laps (t) de temps respectif est la distance parcourue en moyenne dans le laps (t) de temps respectif entre respectivement deux arcs électriques successifs apparu sur la caténaire.

12. Procédé suivant la revendication 11,
    **caractérisé en ce que**
    l'on définit la distance entre deux arcs électriques successifs apparus sur la caténaire au moyen des horodatages qui leur appartient.

13. Produit de programme d'ordinateur, comportant des moyens pour effectuer le procédé suivant l'une des revendications 1 à 12.

FIG 1

FIG 2

**EP 3 771 594 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016201416
- DE 102017217450 A1